Europäisches Patentamt

(19) European Patent Office

Office européen des brevets

(11) Numéro de publication: **0 241 366**
**A1**

## (12) DEMANDE DE BREVET EUROPEEN

(21) Numéro de dépôt: **87400754.5**

(22) Date de dépôt: **06.04.87**

(51) Int. Cl.⁴: **A 01 K 41/06**

(30) Priorité: **07.04.86 FR 8604923**

(43) Date de publication de la demande:
**14.10.87 Bulletin 87/42**

(84) Etats contractants désignés: **BE DE GB IT NL**

(71) Demandeur: **BEKOTO INTERNATIONAL**
**5, Av. du Général de Gaulle**
**F-60304 Senlis (FR)**

(72) Inventeur: **Crampagne, Raymond**
**63, rue Henri Adam, Saint Avertin**
**37170 Chambray-Les-Tours (FR)**

(74) Mandataire: **Laget, Jean-Loup**
**Cabinet Pierre Loyer 18, Rue de Mogador**
**F-75009 Paris (FR)**

(54) Chariot de support de tiroirs d'incubation.

(57) Chariot de support de tiroirs d'incubation disposés en piles. Les cadres de support (11, 12) de tiroirs de deux piles voisines sont décalés en hauteur, et portés par des pivots (13 et 14) articulés sur des montants verticaux arrière (15) et des barres horizontales avant (16), leur inclinaison étant commandée par une tringle (17) articulée sur un coin arrière de tous les cadres de support de tiroirs d'une même pile.

Fig. 4

EP 0 241 366 A1

Bundesdruckerei Berlin

## Description

### Chariot de support de tiroirs d'incubation

L'invention concerne un chariot de support de tiroirs d'incubation, utilisable dans les incubateurs de grande capacité.

Dans les incubateurs connus, on utilise des chariots comportant une ou plusieurs piles juxtaposées de tiroirs d'incubation, qui sont en général des plateaux alvéolés destinés à recevoir les oeufs à incuber. Au cours des 18 jours environ que dure le séjour en incubateur, il est nécessaire de changer la position des oeufs à des intervalles de temps compris entre une demi-heure et une heure en général afin d'éviter un collage de l'embryon contre la paroi. Pour assurer ce changement de position, les tiroirs d'incubation sont inclinés d'environ 40 à 45° par rapport à leur position horizontale de chargement, et à chaque intervalle de temps, on inverse leur inclinaison. Dans un incubateur de type classique, une pile de tiroirs est disposée dans un cadre dont les deux faces d'extrémités sont des parallélogrammes déformables à deux grands côtés verticaux. Les deux petits côtés sont montés pivotants, en leur milieu, sur l'armature du chariot qui porte en général plusieurs cadres juxtaposés.

Pendant l'incubation, les oeufs sont maintenus à la même température au moyen d'une installation de ventilation qui assure un brassage de l'air dans des sens qui dépendent du type de l'incubateur. Ainsi dans un incubateur de type tunnel le sens de ventilation est longitudinal par rapport aux tiroirs d'incubation. Dans ce type d'incubateur, un chariot porte en général plusieurs piles de tiroirs juxtaposées, qui sont inclinées toutes ensembles soit à gauche, soit à droite. Du fait de cette inclinaison, il n'y a entre les oeufs de deux tiroirs superposés qu'un espace restreint, alors qu'entre deux piles, il y a un espace large. Il en résulte que la ventilation des oeufs placés au milieu des tiroirs est difficilement assurée alors que le flux d'air est grand entre les piles de tiroirs.

L'efficacité de l'installation de ventilation n'est assurée qu'en imposant un grand débit d'air, ce qui augmente le coût de fonctionnement.

Dans les incubateurs où le flux d'air de ventilation est transversal aux tiroirs, les pertes de charge augmentent considérablement avec le nombre de piles de tiroirs à ventiler.

L'un des buts de l'invention est de proposer une disposition des tiroirs assurant une circulation plus facile de l'air de ventilation, et par voie de conséquence une meilleure régularité de la température de tous les oeufs dans l'incubateur.

Un autre but de l'invention est d'assurer la ventilation régulière de l'incubateur avec une consommation d'énergie réduite par rapport aux incubateurs connus.

La présente invention a pour objet un chariot de support de tiroirs d'incubation, du type dans lequel les tiroirs d'incubation sont disposés en piles juxtaposées, et sont susceptibles d'être inclinés dans chaque pile dans un sens ou dans l'autre, caractérisé en ce que les tiroirs de deux piles voisines sont décalés en hauteur.

Selon d'autres caractéristiques de l'invention :

- les tiroirs d'incubation reposent sur des cadres de support montés pivotants autour de leur axe longitudinal,
- chaque cadre de support de tiroir est porté par un pivot arrière articulé sur un montant vertical du chariot, et un pivot avant articulé sur une barre horizontale du chariot,
- l'inclinaison des tiroirs d'une pile est assurée par une seule tringle articulée dans un angle arrière des cadres de support de tiroirs,
- lorsqu'ils sont en position horizontale, les tiroirs de deux piles voisines se recouvrent partiellement,
- les tiroirs de deux piles voisines sont inclinés dans des sens différents.

D'autres caractéristiques de l'invention ressortiront de la description suivante faite avec référence au dessin annexé sur lequel on peut voir :

Figure 1 : une vue schématique d'un chariot de support de tiroirs d'incubation à trois piles de tiroirs, de type connu ;

Figure 2 : une vue schématisue d'un chariot de support de tiroirs d'incubation selon un mode de réalisation de l'invention ;

Figure 3 : une vue perspective d'un support de tiroir d'incubation de type connu ;

Figure 4 : une vue perspective d'une portion de chariot de support de tiroirs selon l'invention.

En se reportant au dessin, on peut voir une armature 1 d'un chariot de type connu, à trois piles de tiroirs d'incubation 2, 3, 4. Chaque pile de tiroirs est disposée dans un cadre dont les deux faces d'extrémité sont des parallélogrammes déformables à grands côtés verticaux (5 et 6 par exemple). Les petits côtés de ces parallélogrammes (7 et 8 par exemple) sont montés pivotants, en leur milieu, sur l'armature du chariot. Une tringlerie 9 est prévue pour la commande simultanée, par un seul vérin, de l'inclinaison des trois piles de tiroirs.

Les tiroirs sont symbolisés par les traits obliques tels que 10. On voit que la distance séparant les oeufs de deux tiroirs superposés diminue sensiblement lorsque les tiroirs sont inclinés, et que corrélativement l'espace entre deux piles voisines s'élargit.

De ce fait, pour assurer une bonne ventilation des oeufs qui se trouvent au milieu d'un tiroir, il est nécessaire de prévoir une ventilation à très grand débit, c'est-à-dire à forte consommation d'énergie.

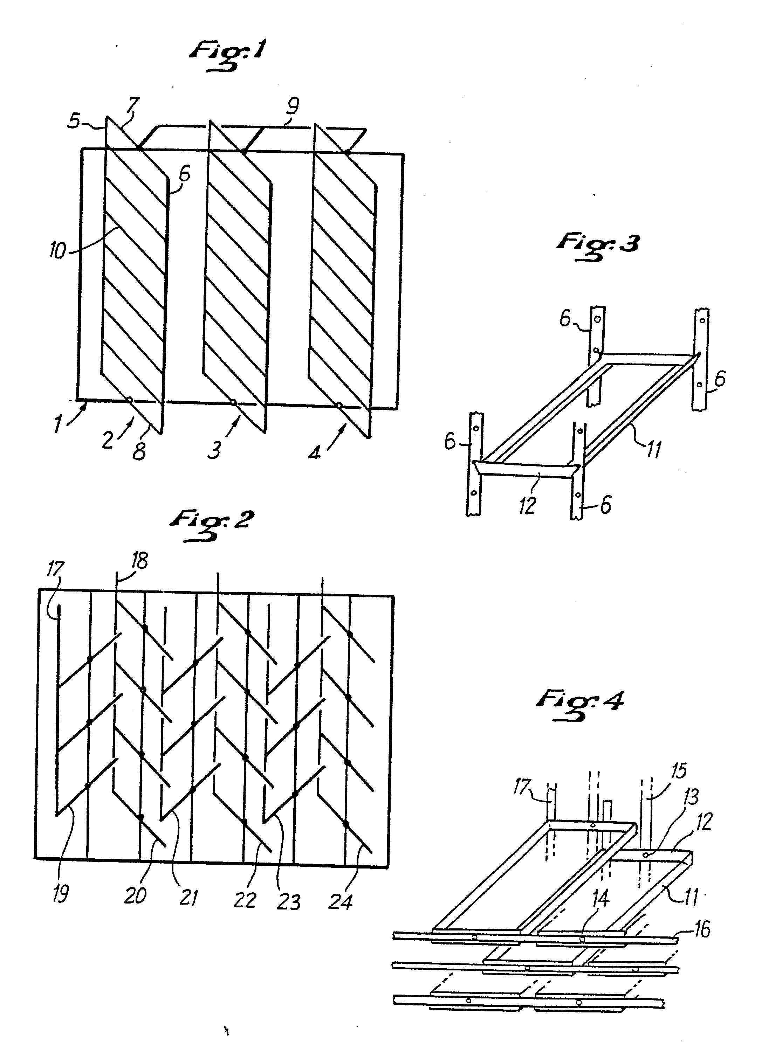

Sur la figure 3, on voit le support proprement dit d'un tiroir d'incubation de type connu, dans lequel les montants verticaux 6 sont reliés par des traverses longitudinales 11 et transversales 12, articulées sur les montants 6.

L'invention ayant pour but principal d'assurer une bonne ventilation des oeufs placés au milieu des tiroirs, il est proposé d'extraire un tiroir sur deux dans une pile, les tiroirs extraits étant regroupés en une pile voisine, avec un écartement entre eux double de celui qu'ils ont dans une pile de type connu.

Ainsi une pile de tiroirs de la figure 1 est dédoublée en deux piles voisines comportant en tout le même nombre de tiroirs, mais ces tiroirs étant, dans chaque pile, deux fois plus espacés.

Selon un mode de réalisation de l'invention, les tiroirs sont toujours posés sur des cadres de support constitués de traverses longitudinales 11 et transversales 12 (figure 4), mais ces cadres de support sont montés pivotants sur leur axe longitudinal. Cet axe est matérialisé par un premier pivot 13 situé au milieu de la traverse 12 placée à l'arrière du chariot et un deuxième pivot 14 situé au milieu de la traverse 12 placée à l'avant du chariot. Le premier pivot 13 est porté par un montant vertical 15 fixe du chariot, et le deuxième pivot 14 par une barre 16 horizonale fixe du chariot. Cette disposition permet un chargement des tiroirs plus facile par la face avant du chariot, qui ne comporte pas de montants verticaux. De plus, les montants verticaux 15 de la face arrière du chariot servent de butée de sécurité lors du chargement des tiroirs.

L'inclinaison des tiroirs est assurée par une tringle 17, articulée dans un angle arrière du cadre de support de chaque tiroir d'une même pile. Cette tringle 17 assure le basculement de tous les tiroirs de la pile dans un sens et dans l'autre, sans avoir à supporter le poids des tiroirs, c'est-à-dire avec une commande de moindre puissance, à vérin pneumatique par exemple. En effet, le poids des tiroirs est entièrement supporté par les montants arrière 15 d'une part et les barres avant 16 d'autre part.

Selon un mode de réalisation préféré de l'invention, symbolisé figure 2 en coupe transversale, les tiroirs des piles de rang impair 19, 21, 23 sont inclinés dans un sens (vers la gauche par exemple), et les tiroirs des piles de rang pair (20, 22, 24) sont inclinés dans l'autre sens (vers la droite). Dans cette disposition, les points de pivotement des tiroirs sont disposés en quinconce, et les tiroirs avec des inclinaisons alternées d'une pile à l'autre. Les tringles de commande d'inclinaison des chariots se trouvent alors alternativement en position basse (17) et en position haute (18). Lorsque les tiroirs sont tous en position horizontale, au chargement par exemple, leur disposition est celle de la figure 4.

Lorsque les tiroirs sont inclinés (figure 2), on peut voir que la ventilation est bien assurée. S'il s'agit d'une ventilation longitudinale, c'est-à-dire d'avant en arrière sur la figure 2, les passages libres pour le flux d'air sont relativement réguliers et il n'y a que de très faibles pertes de charge. La puissance installée pour assurer la ventilation peut donc être relativement faible. Cependant, comme les espaces entre tiroirs superposés sont larges, la ventilation des oeufs du milieu des tiroirs est bien assurée.

S'il s'agit d'une ventilation transversale ou verticale, on retrouve les mêmes avantages d'une ventilation efficace pour une puissance installée réduite.

Enfin, il faut remarquer qu'avec des inclinaisons alternées pour les piles de tiroirs, et la disposition des pivots sur les montants arrière et les barres avant, on peut rapprocher les piles de tiroirs et accepter un recouvrement partiel des tiroirs de deux piles voisines (figure 2 et figure 4), ce qui permet de réduire l'encombrement en largeur du chariot.

Il va de soi que si l'on écarte l'une de l'autre les piles de tiroirs au point d'éviter tout recouvrement ou de ne réaliser qu'un recouvrement très faible, on peut assurer le basculement de tous les tiroirs simultanément dans le même sens, tout en gardant les avantages précités de la ventilation efficace et de la puissance installée réduite.

**Revendications**

1. Chariot de support de tiroirs d'incubation, du type dans lequel les tiroirs d'incubation sont disposés en piles juxtaposées, et sont susceptibles d'être inclinés dans chaque pile dans un sens ou dans l'autre, caractérisé en ce que les tiroirs de deux piles voisines sont décalés en hauteur.

2. Chariot selon la revendication 1, caractérisé en ce que les tiroirs d'incubation reposent sur des cadres de support montés pivotants autour de leur axe longitudinal.

3. Chariot selon la revendication 2, caractérisé en ce que chaque cadre de support de tiroir est porté par un pivot arrière (13) articulé sur un montant vertical (15) du chariot, et un pivot avant (14) articulé sur une barre horizontale (16) du chariot.

4. Chariot selon la revendication 2, caractérisé en ce que l'inclinaison des tiroirs d'une pile est assurée par une seule tringle (17) articulée dans un angle arrière des cadres de support de tiroirs.

5. Chariot selon la revendication 1, caractérisé en ce que lorsqu'ils sont en position horizontale, les tiroirs de deux piles voisines se recouvrent partiellement.

6. Chariot selon la revendication 1, caractérisé en ce que les tiroirs de deux piles voisines sont inclinés dans des sens différents.

7. Chariot selon la revendication 1, caractérisé en ce que les tiroirs de deux piles voisines sont inclinés dans le même sens.

0241366

Fig.1

Fig.3

Fig.2

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 539 301 (TIJSSELING'S FABRIEKEN) * Figures 1,2 * | 1,2,7 | A 01 K 41/06 |

-----

DOMAINES TECHNIQUES
RECHERCHES (Int. Cl.4)

A 01 K

Le présent rapport de recherche a été établi pour toutes les revendications

| Lieu de la recherche | Date d'achèvement de la recherche | Examinateur |
|---|---|---|
| LA HAYE | 26-06-1987 | VILBIG K |